# EUROPEAN PATENT APPLICATION

(11) **EP 1 701 252 A1**
(43) Date of publication of application: **13.09.2006**
(21) Application number: 06004270.2
(22) Date of filing: 02.03.2006
(51) Int. Cl.: G06F 9/44, G06F 9/46

(54) **Systems and methods for managing control systems through java extensions**

(30) Priority: 08.03.2005 US 74552
(71) Applicant: Rockwell Automation Technologies, Inc., Mayfield Heights, OH 44124 (US)
(72) Inventor: Hartman, Justin R., Solon, OH 44139 (US)
(74) Representative: Jung HML

(57) **Abstract**

The subject invention relates to packaging industrial control device data points, classes, services, notifications, behaviors, etc. into a suitable format for communication with entities such as SCADA, MES, ERP, and MC systems, applications, intelligent agents, autonomous I/O, sensor networks, etc. without any need for industrial control protocol support by these entities. The systems and methods wrap such industrial control information within objects accessible by these entities. In one instance, the classes, data points, services, notifications, behaviors, etc. can be wrapped within a Java wrapper and made accessible to at least on of these entities. Such exposure can include making accessible constructors, instances, attributes, permissions, operations, and notifications. Control devices can implement an agent to manage these packaged resources and expose a management API to distributed entities, which can create and destroy managed objects, get and set attribute values, invoke operations, and receive event notifications from other managed objects.

## Description

### TECHNICAL FIELD

The subject invention relates to industrial control systems and, more particularly, to systems and methods that facilitate communication with industrial controllers through wrapping industrial controller related information in Java wrappers and exposing the resulting Java objects.

### BACKGROUND OF THE INVENTION

Industrial controllers are special purpose processing devices used for controlling (e.g., automated and semi-automated) industrial processes, machines, manufacturing equipment, plants, and the like. A typical controller executes a control program or routine in order to measure one or more process variables or inputs representative of the status of a controlled process and/or effectuate outputs associated with control of the process. Such inputs and outputs can be digital (e.g., "1" or "0," "on" or "off,"...) and/or analog, assuming a continuous range of values. A typical control routine can be created in a controller configuration environment that has various tools and interfaces whereby a developer can construct and implement a control strategy using industrial and conventional programming languages or graphical representations of control functionality. Such control routine can be downloaded from the configuration system into one or more controllers for implementation of the control strategy in controlling a process or machine.

Measured inputs received from a controlled process and outputs transmitted to the process can pass through one or more input/output (I/O) modules in a control system. Such modules can serve in the capacity of an electrical interface between the controller and the controlled process and can reside locally or remotely from the controller. Inputs and outputs can be recorded in I/O memory. The input values can be asynchronously or synchronously read from the controlled process by one or more input modules and output values can be written directly to memory by a processor for subsequent communication to the process by specialized communications circuitry. An output module can interface directly with a controlled process by providing an output from memory to an actuator such as a motor, drive, valve, solenoid, and the like. During execution of the control routine, values of the inputs and outputs exchanged with the controlled process can pass through memory. The values of inputs in memory can be asynchronously or synchronously updated from the controlled process by dedicated and/or common scanning circuitry. Such scanning circuitry can communicate with input and/or output modules over a bus on a backplane or network. The scanning circuitry can also asynchronously or synchronously write values of the outputs in memory to the controlled process. The output values from the memory can be communicated to one or more output modules for interfacing with the process. Thus, a controller processor can simply access memory rather than communicating directly with the controlled process.

In distributed control systems, controller hardware configuration can be facilitated by separating the industrial controller into a number of control elements, each of which performs a different function. Particular control modules needed for the control task can then be connected together on a common backplane within a rack and/or through a network or other communications medium. The control modules can include processors, power supplies, network communication modules, and I/O modules exchanging input and output signals directly with the controlled process. Data can be exchanged between modules using a backplane communications bus, which can be serial or parallel, or *via* a network. In addition to performing I/O operations based on network communications, smart modules exist that can execute autonomous logical or other control programs or routines. Various control modules of a distributed industrial control system can be spatially distributed along a common communication link in several locations. Certain I/O modules can thus be located proximate a portion of the controlled equipment, and away from the controller. Data can be communicated with these remote modules over a common communication link, or network, wherein all modules on the network communicate *via* a standard communications protocol.

In a typical distributed control system, one or more I/O modules are provided for interfacing with a process. The outputs derive their control or output values in the form of a message from a master or peer device over a network or a backplane. For example, an output module can receive an output value from a processor *via* a communications network or a backplane communications bus. The desired output value is generally sent to the output module in a message. The output module receiving such a message will provide a corresponding output (analog or digital) to the controlled process. Input modules measure a value of a process variable and report the input values to another device over a network or backplane. The input values can be used by a processor for performing control computations.

In many instances, control applications at a Supervisory Control and Data Acquisition (SCADA), a Manufacturing Execution System (MES), an Enterprise Resource Planning (ERP), and/or a Machine Control (MC) system level must be able to communicate with industrial controllers in order to exercise supervisory control and data acquisition. Conventionally, this can be achieved through supporting industrial control system protocols. For example, SCADA, MES, ERP and/or MC systems and/or associated applications can be designed and implemented to support industrial control protocols in order to communicate with industrial controllers. Thus, there is a need for an improved technique to communicate with industrial controllers without having to support industrial control protocols.

### SUMMARY OF THE INVENTION

The following presents a simplified summary of the subject invention in order to provide a basic understanding of some aspects of the invention. This summary is not an extensive overview of the invention. It is intended neither to identify key or critical elements of the invention nor to delineate the scope of the invention. Its sole purpose is to present some concepts of the invention in a simplified form as a prelude to the more detailed description that is presented later.

The systems and methods of the subject invention package industrial control device data points, classes, services, notifications, behaviors, etc. into a suitable format for communication with SCADA, MES, ERP, and/or MC systems, applications, intelligent agents, autonomous I/O, sensor networks, etc. without any need for industrial control protocol support at the SCADA, MES, ERP, MC, application, intelligent agent, autonomous I/O, sensor networks, etc. layers. The system and methods wrap industrial control device data points, classes, services, notifications, behaviors, etc. within objects accessible by SCADA, MES, ERP, and MC systems, applications, intelligent agents, autonomous I/O, sensor networks, etc.

For example, the systems and methods can be utilized to encapsulate data points and Control & Information Protocol (CIP) classes within a Java wrapper. Non-CIP classes can also be exposed with such Java objects. Each Java object can expose a management interface through a Java Management Extensions (JMX) framework, including constructors available for creating object instances, available object attributes and respective permissions, operations that can be invoked on the object, and notifications that the object can send to registered listeners. Individual control devices can implement an agent (e.g., a server) to manage these resources and expose a management Application Programming Interface (API) to any or all SCADA, MES, ERP, and/or MC systems, applications, intelligent agents, autonomous I/O, sensor networks, *etc.,* which can exercise supervisory control, and create and destroy managed objects, get and set attribute values, invoke operations, and receive event notifications from other managed objects in the entire system. It is to be appreciated that this example is provided for explanatory purposes and does not limit the invention.

In one aspect of the invention, a system that facilitates communication with industrial controllers is provided. The system includes a packaging mechanism that can package industrial controller information into a suitable format for conveyance to various entities. Examples of suitable industrial controller information include input/output (I/O) (e.g., data points), applications, services, notifications, behaviors, program logic, and/or classes, and examples of suitable entities include an industrial controller, SCADA, MES, ERP, and MC systems, applications, an intelligent agent, autonomous I/O, sensor networks, *etc.* The packaging mechanism can be employed in connection with an industrial controller (e.g., soft and hard) to facilitate communication between the industrial controller and one or more of other industrial controllers and/or SCADA, MES, ERP, and MC systems, applications, intelligent agents, autonomous I/O, sensor networks, etc. Where communication is with another industrial controller, it is to be appreciated that the controllers can reside within similar and/or different networks. For instance, the controllers can be associated with a NetLinx, a Control & Information Protocol (CIP), a Data Highway (DH), a Data Highway Plus (DH+), a fieldbus, a profibus, etc. network. In addition, the controllers can be associated with similar and/or different protocols within a network. For instance, the controllers can both reside within a CIP based network, and either or both controllers can be associated with DeviceNet, ControlNet, EtherNet/IP and/or Controller Area Network (CAN).

In another aspect of the invention, the system employs a mechanism to wrap the industrial controller information into an object. For example, the industrial controller can utilize CIP and/or other classes, which can be packaged within a Java object *via* a Java wrapper. The resultant object can be exposed to one or more of other industrial controllers and/or SCADA, MES, ERP, and MC systems, applications, intelligent agents, autonomous I/O, sensor networks, etc. through an Application Programming Interface (API) or the like. In one aspect of the subject invention, the industrial controller can be associated with both CIP and non-CIP classes. In such instances, both types can be packaged into similar and/or different objects. For example, the CIP classes and associated data points can be wrapped into Java objects and the non-CIP classes and associated data points can be wrapped into different objects, wherein both can be exposed to the other industrial controllers and/or SCADA, MES, ERP, and MC systems, applications, intelligent agents, autonomous I/O, sensor networks, *etc.* In another instance, the CIP and non-CIP classes can be wrapped into the same Java objects. Exposure can be through a JMX framework and can include exposing constructors for creating object instances, object attributes and respective permissions, operations that can be invoked on the object, and notifications that the object can send to registered listeners. The entities can access the packaged information to exercise supervisory control and data acquisition. For instance, the entities can create and destroy managed objects, get and set attribute values, invoke operations, and receive event notifications from other managed objects associated with the system.

In yet another aspect of the invention, methods for communicating with an industrial controller are provided. In one instance, industrial control information that is to be accessed is aggregated. This aggregated information is suitably packaged based on an entity communicating with the industrial controller. The packaged data is exposed to a communicating industrial controller and/or SCADA, MES, ERP, and MC systems, applications, intelligent agents, autonomous I/O, sensor networks, *etc.* It is to be appreciated that the control information can include data points, classes, services, notifications, behaviors, etc. that are packaged into one or more Java objects, wherein the resultant Java objects are exposed through an API. Such exposure can be through a JMX framework, wherein constructors for creating object instances, object attributes and their permissions, operations that can be invoked on the object, and notifications that the object can send to registered listeners are exposed. The control, SCADA, MES, ERP, and/or MC systems, applications, intelligent agents, autonomous I/O, sensor networks, *etc.* can access the objects to exercise supervisory control and data acquisition, for example, the control, SCADA, MES, ERP, and/or MC systems, applications, intelligent agents, autonomous I/O, sensor networks, *etc.* can access the Java objects to create and destroy managed objects, get and set attribute values, invoke operations, and receive event notifications.

To the accomplishment of the foregoing and related ends, the invention, then, comprises the features hereinafter fully described. The following description and the annexed drawings set forth in detail certain illustrative aspects of the invention. However, these aspects are indicative of but a few of the various ways in which the principles of the invention can be employed. Other aspects, advantages and novel features of the invention will become apparent from the following detailed description of the invention when considered in conjunction with the drawings.

### BRIEF DESCRIPTION OF THE DRAWINGS

FIG. 1 illustrates an exemplary system that facilitates communication with industrial controllers.

FIG. 2 illustrates an exemplary system that packages industrial controller information for communication with various entities.

FIG. 3 illustrates an exemplary industrial control system that packages control information within objects for communication with various entities.

FIG. 4 illustrates an exemplary industrial control system interacting with a plurality of clients through packaged control information.

FIG. 5 illustrates an exemplary system that facilitates control information exchange with an industrial controller.

FIG. 6 illustrates an exemplary a system that employs intelligence to facilitate packaging industrial controller information.

FIG. 7 illustrates an exemplary method for communicating with an industrial controller through packaging control information.

FIG. 8 illustrates an exemplary method for packaging CIP classes and data points in a Java object to facilitate communicating with an industrial controller.

FIG. 9 illustrates an exemplary computing architecture that can be employed in connection with the subject invention.

FIG. 10 illustrates an exemplary networking environment that can be employed in connection with the subject invention.

### DETAILED DESCRIPTION OF THE INVENTION

As utilized in this application, terms "component," "module," "system," "controller," and variants thereof are intended to refer to a computer-related entities, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components can reside within a process and/or thread of execution and a component can be localized on one computer and/or distributed between two or more computers.

The systems and methods of the subject invention relate to encapsulating industrial control device data points, classes, *etc.* into a suitable format for communication with entities such as SCADA, MES, ERP, and/or MC systems, applications, intelligent agents, autonomous I/O, sensor networks, etc. without any need for industrial control protocol support by such entities. The system and methods can wrap industrial control device data points, classes, services, notifications, behaviors, etc. within one or more objects accessible by these entities, and expose the one or more objects, including constructors, instances, attributes, permissions, operations, and notifications. Control devices can implement an agent to manage these resources and expose a management API to distributed clients. The subject invention enables any or all of these entities to create and destroy managed objects, get and set attribute values, invoke operations, and receive event notifications from other managed objects in the system.

The subject invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

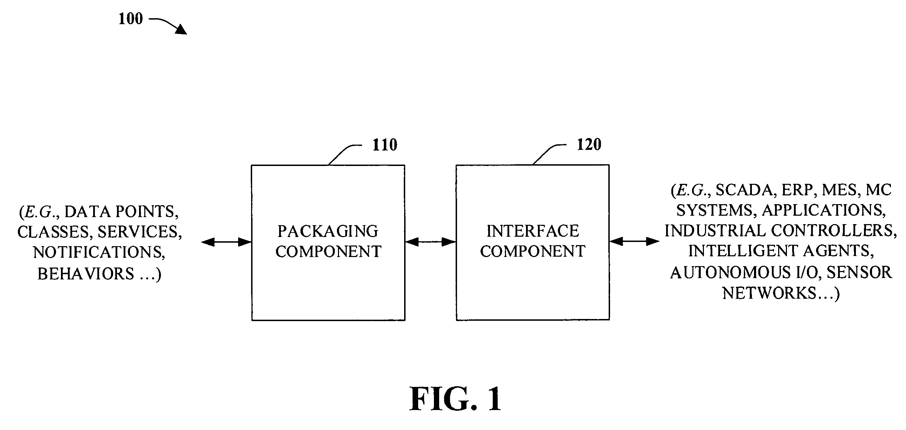

FIG. 1 illustrates a system 100 that facilitates communication with industrial controllers. The system 100 includes a packaging component 110 that can package industrial control information into a suitable format for conveyance to entities such as, for example, an industrial controller and/or SCADA, MES, ERP, and/or MC systems, applications, intelligent agents, autonomous I/O, sensor networks, etc. Examples of suitable industrial controller information include input/output (I/O) (e.g., data points), applications, program logic, classes, services, notifications, behaviors, etc. For instance, the data packaging component 110 can package data points, classes, services, notifications, behaviors, etc. together into one or more objects. It is to be appreciated that the control information can be associated with essentially any component of a control system. Examples of such components include, but are not limited to, industrial controllers, programmable logic controllers, control devices, modules, agents, data tables, scanners, bridges, I/O, *etc.*

The packaging component 110 can be employed in connection with an industrial controller (not shown) to facilitate communication between the industrial controller and one or more of other industrial controllers and/or SCADA, MES, ERP, and MC systems, applications, intelligent agents, autonomous I/O, sensor networks, etc. Where communication is with another industrial controller, it is to be appreciated that the controllers can reside within similar and/or different networks. For instance, the controllers can be associated with a NetLinx, a Control & Information Protocol (CIP), a Data Highway (DH), a Data Highway Plus (DH+), a fieldbus, a profibus, etc. network. In addition, the controllers can be associated with similar and/or different protocols within a network. For instance, the controllers can both reside within a CIP based network, but either or both controllers can be associated with DeviceNet, ControlNet, EtherNet/IP and/or Controller Area Network (CAN).

The packaging component 110 can also receive packaged information directed to the industrial controller by at least one of the aforementioned entities. Likewise, this information can include I/O, applications, program logic, and/or classes. In addition, the received information can similarly be packaged into one or more objects, wherein the packaging component 110 can facilitate utilizing the data points and/or classes therein.

As noted previously, in many instances systems and/or applications at the SCADA, MES, ERP, MC application, intelligent agent, autonomous I/O, sensor network, *etc.* level need to communicate with industrial controllers, for example, to exercise supervisory control and/or data acquisition. Conventionally, this is achieved through control system protocols. With control system protocols, the control applications must be designed and implemented to support industrial control protocols in order to communicate with industrial controllers. The system 100 can mitigate any need for industrial control protocol support at the SCADA, MES, ERP, MC, application, intelligent agent, autonomous I/O, sensor network, *etc* layers through packaging control information in a suitable format such as an object.

The system 100 further includes an interface component 120. The interface component 120 provides a mechanism to couple to the packaging component 120 to various control, SCADA, MES, ERP, and/or MC systems, applications, intelligent agents, autonomous I/O, sensor networks, *etc.* For instance, the interface component 120 can include various adapters, connectors, channels, protocols, *etc.* for dynamic and seamless interaction with such entities. Although depicted as an entity separate, it is to be understood that the interface component 120 can be incorporated into the packaging component 110 and/or any entity associated therewith such as, for example, an industrial controller, an I/O module, a bridge, a Human Machine Interface (HMI), *etc.* In addition, the interface component 120 can provide for wire and/or wireless communication with the control, SCADA, MES, ERP, and/or MC systems, applications, intelligent agents, autonomous I/O, sensor networks, etc. Examples of communications schemes that can be employed in accordance with the subject invention include Ethernet, serial port, parallel port, coaxial cable, Infrared (IR), BlueTooth, Universal Serial Bus (USB), Firewire, WiFi, WiMax, and the like. Examples of suitable communications mediums include category 1-5 wire (e.g., CAT5 UTP 8-wire cable), coaxial cable, USB, RS-232, RS-485, *etc.*

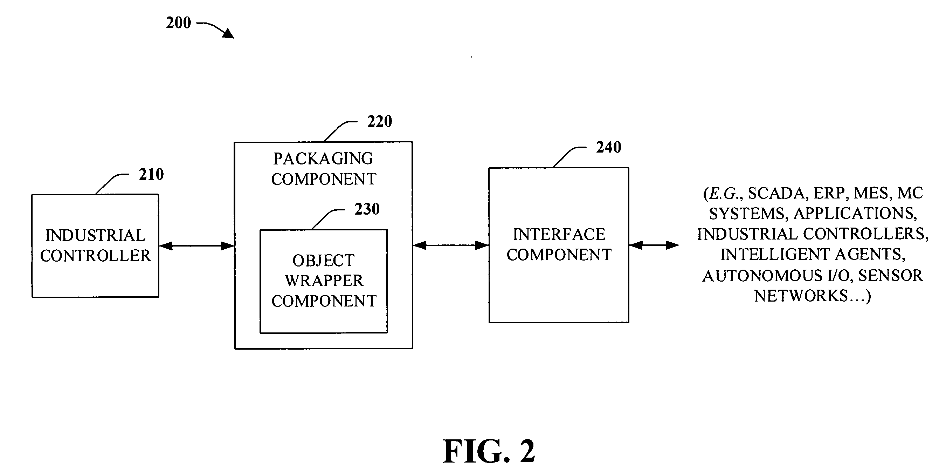

FIG. 2 illustrates a system 200 that packages industrial controller information for communication with various entities. The system 200 includes an industrial controller 210, which can be hardware and/or software based. The industrial controller 210 can be utilized to control various entities such as plants, machines, industrial automation processes, manufacturing equipment, and the like. In addition, the industrial controller 210 can execute control programs, routines, instruction sets, and the like that obtain and/or analyze inputs and/or generate outputs that effectuate the controlled entity. It is to be appreciated that such control programs can be programmed in essentially any programming language. Examples of suitable languages include industrial control languages (e.g., structured text (ST), sequential function chart (SFC), functional block diagram (FBD), instruction list (IL), and ladder diagram (LD)), C, C++, C#, Graphical Motion Language (GML), Java, Flow-Charts, *etc.*, and/or any combination thereof.

The industrial controller 210 is coupled to a packaging component 220, which can package industrial controller information (e.g., data points, classes...) into a suitable format for conveyance to entities such as, for example, an industrial controller, SCADA, MES, ERP, and MC systems, applications, intelligent agents, autonomous I/O, sensor networks, etc. The packaging component 220 includes an object wrapper component 230 that can be utilized to wrap the industrial controller information into an object. For example, the industrial controller 210 can be associated with CIP classes. Such classes can be provided to the packaging component 220 and packaged by the object wrapper component 230 through a Java wrapper. In general, the CIP protocol can be used as a binary interface to data and/or services that are provided by various applications and communications related object interfaces. An example of a CIP object accessible *via* CIP protocol include a file object, which includes attributes for file name, length, directory contents, *etc*., and services to upload and download data to a device that supports the CIP protocol

The resultant object can be conveyed to one or more of another industrial controller, SCADA, MES, ERP, and MC systems, applications, intelligent agents, autonomous I/O, sensor networks, etc. through the interface component 240. In one aspect of the subject invention, the industrial controller 210 can additionally be associated with non-CIP classes. In such instances, the CIP and non-CIP classes can be packaged into similar and/or different objects. For example, in one instance the CIP classes and associated data points can be wrapped into Java objects and the non-CIP classes and associated data points can be wrapped into different objects. In another instance, the CIP and non-CIP classes can be wrapped into the same Java objects.

The resultant objects can be exposed to various control, SCADA, MES, ERP, and/or MC systems, applications, intelligent agents, autonomous I/O, sensor networks, etc. through an interface component 240. As noted above, the interface component 240 can include various adapters, connectors, channels, protocols, *etc.* for interaction with such entities. In one aspect of the invention, such exposure can be through a JMX framework and can include exposing constructors for creating object instances, object attributes and permissions, operations that can be invoked on the object, and notifications that the object can send to registered listeners. As such, the interface component 240 essentially provides a management Application Programming Interface (API) to control, SCADA, MES, ERP, and/or MC systems, applications, intelligent agents, autonomous I/O, sensor networks, *etc.*

By packaging industrial controller information into objects such as Java based objects, the system 200 can mitigate designing SCADA, MES, ERP, MC, application, intelligent agent, autonomous I/O, sensor network, *etc* layers to support industrial protocols. In addition, such objects can facilitate SCADA, MES, ERP, and/or MC systems, applications, intelligent agents, autonomous I/O, sensor networks, etc. with exercising supervisory control and data acquisition.

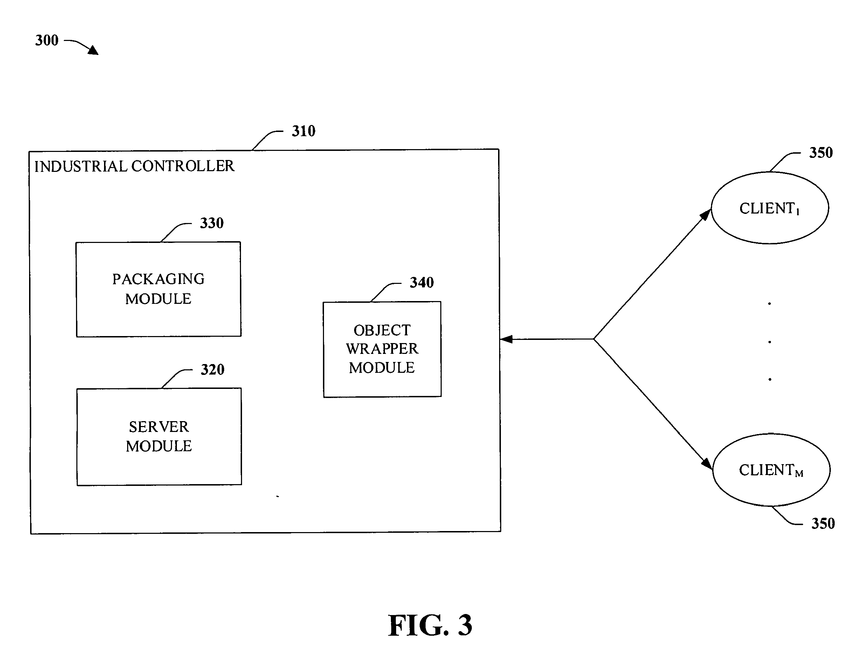

FIG. 3 illustrates an industrial control system 300. The system 300 includes an industrial controller 310. As depicted, the industrial controller 310 includes a server module 320, a packaging module 330, and an object wrapper module 340. In general, the industrial controller 310 executes logic and/or intelligent agents to control various entities such as plants, machines, industrial automation processes, manufacturing equipment, etc. The industrial controller 310 utilizes the packaging module 330 and the object wrapper module 340 to package industrial control information related to such controlled entities and the server module 320 to manage the packaged information.

In one instance, such information can include, but is not limited to, objects and data points. For instance, the packaging component 330 can utilize the object wrapper module 340 to package received data points and classes within objects. It is to be appreciated that such objects can be Java objects, which can expose the constructors, attributes, permissions, operations, and notifications to the clients 350. The clients 350 can leverage the packaged information to create and destroy managed objects, get and set attribute values, invoke operations, and receive event notifications from other managed objects associated with the system 300. It is to be appreciated that the clients 350 can include, but are not limited to, entities such as control, SCADA, MES, ERP, and/or MC systems, applications, intelligent agents, autonomous I/O, sensor networks, etc.

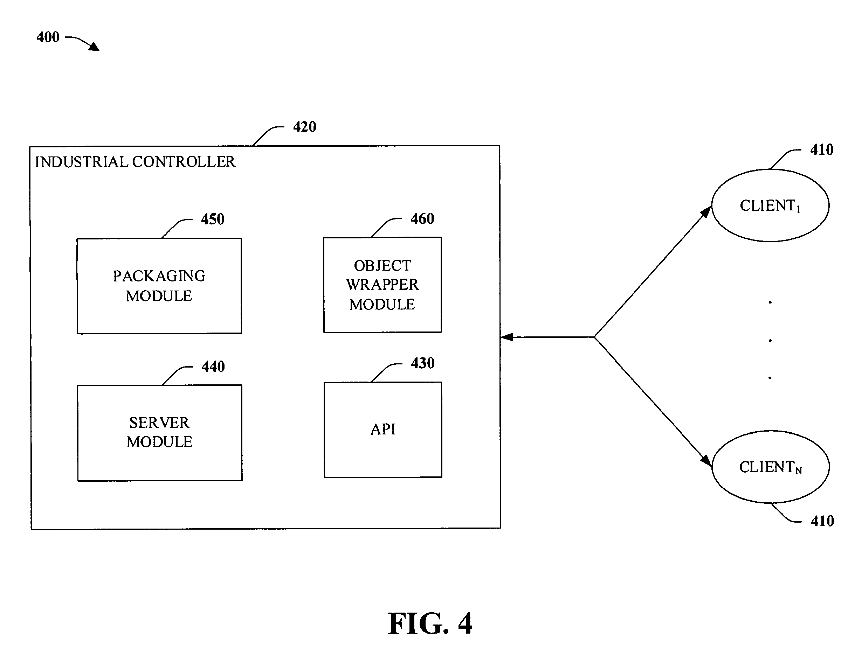

FIG. 4 illustrates an industrial control system 400, wherein a plurality of clients 410 interact with an industrial controller 420. The plurality of clients 410 can be, for example, other industrial controllers and/or SCADA, MES, ERP, and/or MC systems, applications, intelligent agents, autonomous I/O, sensor networks, etc. The clients 410 can interact with the industrial controller 420 through an API 430, which can expose objects associated with the industrial controller 420 to the clients 410. In one aspect of the invention, this exposure can be through a suitable framework and can include exposing object constructors, attributes, permissions, operations, notifications, etc. The industrial controller 420 further includes a server module 440, which can be utilized to manage packaged industrial control information.

In one instance, objects can be generated through a packaging module 450 and an object wrapper module 460. For instance, data points, classes, behaviors, notifications, services, *etc.* can be conveyed to the packaging module 450, which can invoke the object wrapper module 460 to encapsulate the conveyed information within a Java wrapper. The Java objects can be exposed through a JMX framework and can include exposing object constructors, attributes, permissions, operations, notifications, *etc.* The API 430 can then be utilized to allow the clients 410 to access the Java objects and create and destroy managed objects, get and set attribute values, invoke operations, and receive event notifications from other managed objects associated with the system 400.

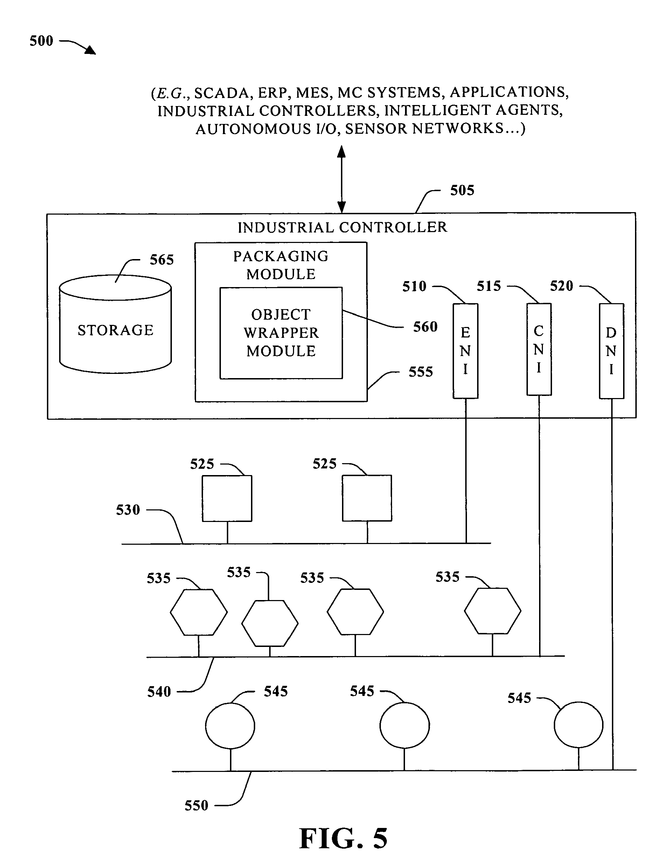

FIG. 5 illustrates a system 500 that facilitate information exchange with an industrial controller. The system 500 includes an industrial controller 505 with an Ethernet/IP interface ("ENI") 510, a ControlNet interface ("CNI") 515 and a DeviceNet interface ("DNI") 520. It is to be understood that this example is provided for explanatory purposes and does not limit the invention. For example, other protocols such as Control Area Network (CAN) as well as other protocols can be utilized in accordance with the subject invention. The Ethernet/IP interface provides for communication with devices 525 residing on an Ethernet/IP network 530; the ControlNet interface 515 provides for communication with devices 535 residing on a ControlNet network 540; and the DeviceNet interface 520 provides for communication with devices 545 residing on a DeviceNet network 550. The devices 525, 535 and 545 can be utilized to control various industrial processes, machines, manufacturing equipment, plants, and the like and can include input, output, memory and processing modules to facilitate control. Respective controllers can execute control programs, routines, instruction sets, and the like, which obtain and/or analyze inputs and/or generate outputs that effectuate the controlled entity (e.g., a motor, a drive, a valve, a solenoid, a switch...). Such control programs can be programmed in essentially any programming language including industrial control languages (e.g., ST, SFC, FBD, IL and LD), C, C++, C#, GML, Java, Flow-Charts, *etc.,* and/or any combination thereof, and/or include new instructions for the purpose of synchronous data movement and/or performing transactions and/or event based tasks.

The industrial controller 505 includes a packaging module 555 and an object wrapper module 560. The industrial controller 505 can utilize the packaging module 555 and the object wrapper module 560 to facilitate communication with the other industrial controllers and/or SCADA, MES, ERP, and/or MC systems, applications, intelligent agents, autonomous I/O, sensor networks, etc. For instance, the industrial controller 505 can store I/O (or data points), control logic, classes, services, notifications, behaviors, etc. in a storage component 565. With conventional systems, in order to access the content of the storage component 565, for example, to access the I/O and/or classes therein, the other industrial controllers and/or SCADA, MES, ERP, and/or MC systems, applications, intelligent agents, autonomous I/O, sensor networks, etc. would have to be able to communicate over a similar industrial control protocol. The packaging module 555 and the object wrapper module 560 can mitigate any need for industrial protocol support at the SCADA, MES, ERP, MC, application, intelligent agent, autonomous I/O, sensor network, *etc.* layers. Instead, the data points, classes, services, notifications, behaviors, etc. can be provided to the packaging module 555, which can utilize the object wrapper module 560 to package the data points, classes, services, notifications, behaviors, etc. within an object that can be exposed to the SCADA, MES, ERP, MC, application, intelligent agent, autonomous I/O, sensor network, etc. layers.

For instance, such data points, classes, services, notifications, behaviors, *etc.* can be wrapped with a Java wrapper, and subsequently exposed to the SCADA, MES, ERP, MC, application, intelligent agent, autonomous I/O, sensor network, etc. layers through a JMX framework, wherein any constructors, attributes, permissions, operations, notifications, *etc.* can be exposed to the SCADA, MES, ERP, MC, application, intelligent agent, autonomous I/O, sensor network, etc. layers. It is to be appreciated that such exposure can be through an API (not shown), which can provide the SCADA, MES, ERP, MC, application, intelligent agent, autonomous I/O, sensor network, etc. layers with access to the Java objects to create and destroy managed objects, get and set attribute values, invoke operations, and receive event notifications from other managed objects associated with the system 500.

It is to be appreciated that the storage component 565 can include memory, including volatile and nonvolatile memory. Examples of such memory include, but are not limited to, nonvolatile memory such as read only memory (ROM), programmable ROM (PROM), electrically programmable ROM (EPROM), electrically erasable programmable ROM (EEPROM), and flash memory. Examples of volatile memory include random access memory (RAM) such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), Rambus Direct RAM (RDRAM), direct Rambus dynamic RAM (DRDRAM), Rambus dynamic RAM (RDRAM), and Magnetic RAM (MRAM).

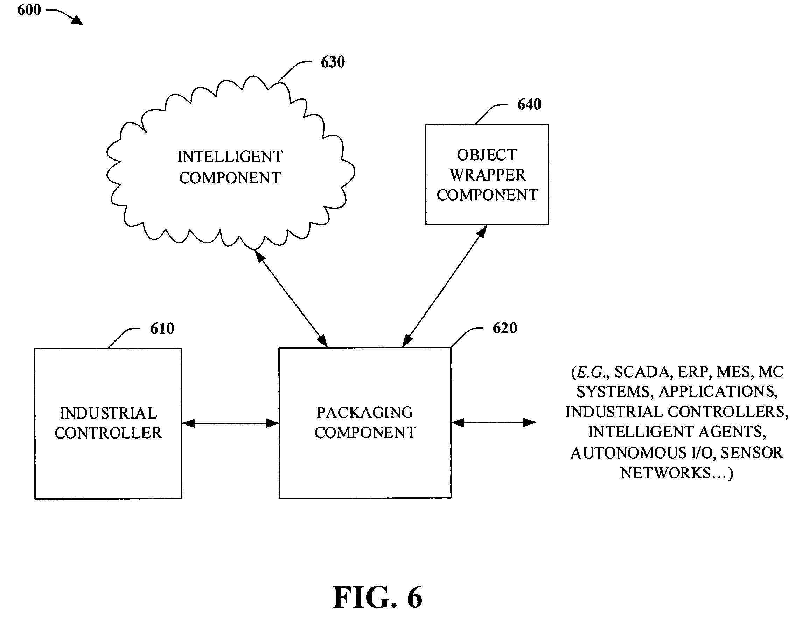

FIG. 6 illustrates a system 600 that employs intelligence to facilitate packaging industrial controller information for communication with various entities. The system 600 includes an industrial controller 610 that employs a packaging component 620 to package industrial control information for communication with various entities such as other industrial controllers and/or SCADA, MES, ERP, and MC systems, applications, intelligent agents, autonomous I/O, sensor networks, etc. The system 600 further includes an intelligent component 630 that facilitates packaging controller information. For example, the intelligence component can facilitate determining what information to package and retrieval of such information. In addition, the intelligent component 630 can facilitate a suitable packaging, for example, based at least in part on communicating entity. For instance, the intelligent component 630 can determine that wrapping data points and classes in a Java object is an appropriate packaging technique. The intelligent component 630 can then invoke an object wrapper component 640 that utilizes a Java wrapper to package the control information with a Java object.

The intelligent component 630 can then facilitate exposing the Java object to the other industrial controllers and/or SCADA, MES, ERP, and MC systems, applications, intelligent agents, autonomous I/O, sensor networks, *etc.,* for example, through an API (not shown). Such exposure can include exposing constructors for creating object instances, object attributes and their permissions, operations that can be invoked on the object, and notifications that the object can send to registered listeners, wherein any of the other industrial controllers and/or SCADA, MES, ERP and MC systems, applications, intelligent agents, autonomous I/O, sensor networks, etc. can access the Java objects to create and destroy managed objects, get and set attribute values, invoke operations, and receive event notifications.

The intelligent component 630 can employ various machine learning techniques, algorithms, approaches, *etc.* For example, the intelligent component 630 can employ a machine learning algorithm that can reason about or infer from a set of observations, features, properties, and/or components. Inference can be employed to generate a probability distribution over the input data and/or identified components. Such inferences can be probabilistic - that is, the computation of a probability distribution over entities identified within the data. Inference can also refer to techniques employed for rendering higher-level decisions. Various classification (explicitly and/or implicitly trained) schemes and/or systems (e.g., support vector machines, neural networks, expert systems, Bayesian belief networks, fuzzy logic, data fusion engines...) can be employed in connection with performing any or all of the above noted functions. In general, a classifier is a function that maps an input attribute vector, x = (x1, x2, x3, x4, ..., xn), to a confidence that the input belongs to a class, that is, f(x) = *confidence(class).* Such classification can employ a probabilistic and/or statistical-based analysis (e.g., factoring into the analysis utilities and costs) to automatically make decisions. One example of a suitable classifier is a support vector machine (SVM), which, in general, operates by finding a hypersurface in the space of possible inputs, wherein the hypersurface attempts to split triggering criteria from non-triggering criteria. This can make the classification suitable for testing samples, data, *etc.* that is near, but not identical to training data. Other directed and undirected model classification approaches include, naïve Bayes, Bayesian networks, decision trees, neural networks, fuzzy logic models, and probabilistic classification models providing different patterns of independence, for example. Classification as used herein also is inclusive of statistical regression that is utilized to develop models of priority.

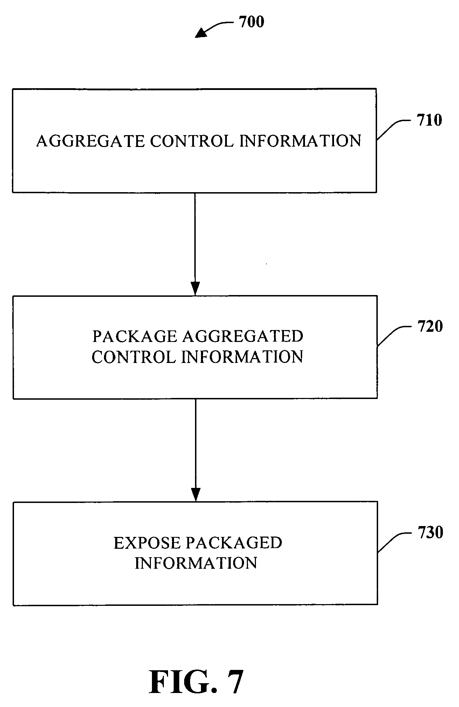

FIGS. 7-8 illustrate methodologies, in accordance with an aspect of the present invention. While, for purposes of simplicity of explanation, the methodologies are shown and described as a series of acts, it is to be understood and appreciated that the present invention is not limited by the order of acts, as some acts can, in accordance with the present invention, occur in different orders and/or concurrently with other acts from that shown and described herein. For example, those skilled in the art will understand and appreciate that one or more of the methodologies could alternatively be represented as a series of interrelated states or events, such as in a state diagram. Moreover, not all illustrated acts may be required to implement the methodologies in accordance with the present invention.

FIG. 7 illustrates a method 700 for communicating with an industrial controller. At reference numeral 710, industrial control information that is to be accessed is aggregated. Examples of such information include data points, applications, program logic, classes, services, notifications, behaviors, etc. At 720, the aggregated information can be suitably packaged based on an entity communicating with the industrial controller. Thus, the packaging can be based on an industrial controller and/or SCADA, MES, ERP, and MC systems, applications, intelligent agents, autonomous I/O, sensor networks, etc. At reference numeral 730, the package data is exposed to the communicating industrial controller and/or SCADA, MES, ERP, and MC systems, applications, intelligent agents, autonomous I/O, sensor networks, *etc.* By packaging industrial controller information into objects and exposing such objects to control, SCADA, MES, ERP, and/or MC systems, applications, intelligent agents, autonomous I/O, sensor networks, *etc.,* the method 700 can mitigate any need to design SCADA, MES, ERP, MC, application, intelligent agent, autonomous I/O, sensor network, *etc.* layers to support industrial protocols and/or programming languages.

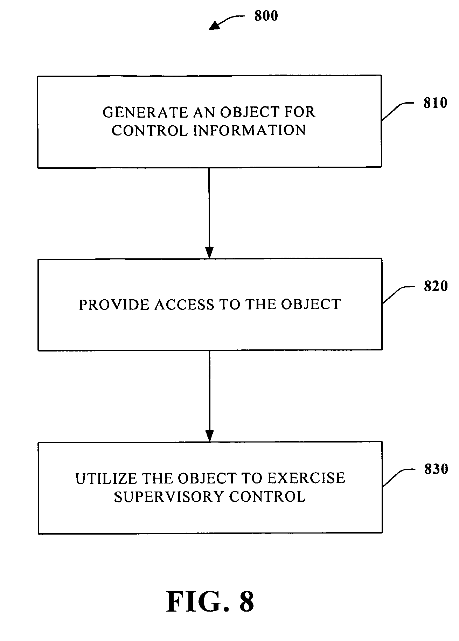

FIG. 8 illustrates a method 800 for communicating with an industrial controller. At reference numeral 810, data points, classes, *etc.* are packaged in a Java object. In many instances, this information includes CIP classes and/or non-CIP classes. In such instances, the CIP and non-CIP classes can be packaged into similar and/or different objects. For example, the CIP classes and associated data points can be wrapped into Java objects and the non-CIP classes and associated data points can be wrapped into different objects. In another instance, the CIP and non-CIP classes can be wrapped into the same Java objects. At 820, the resultant objects can be exposed to various control, SCADA, MES, ERP, and/or MC systems, applications, services, notifications, behaviors, etc. through, for example, an API. In one aspect of the invention, such exposure can be through a JMX framework, wherein constructors for creating object instances, object attributes and their permissions, operations that can be invoked on the object, and notifications that the object can send to registered listeners are exposed. At reference numeral 830, the control, SCADA, MES, ERP, and/or MC systems, applications, services, notifications, behaviors, etc. can access the objects to exercise supervisory control and data acquisition. For example, the control, SCADA, MES, ERP, and/or MC systems, applications, services, notifications, behaviors, etc. can access the Java objects to create and destroy managed objects, get and set attribute values, invoke operations, and receive event notifications.

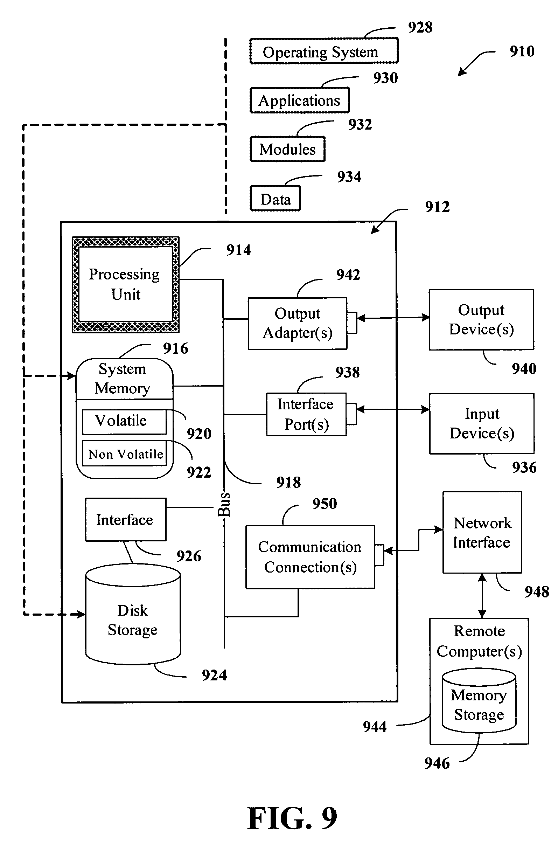

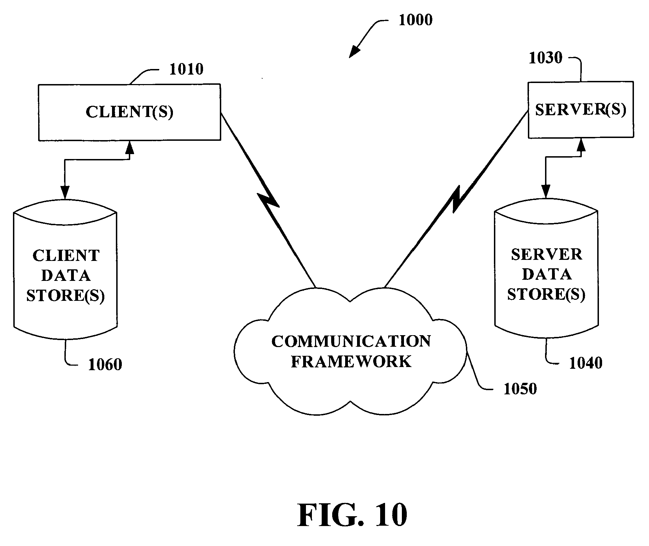

In order to provide a context for the various aspects of the invention, FIGS. 9 and 10 as well as the following discussion are intended to provide a brief, general description of a suitable computing environment in which the various aspects of the present invention can be implemented. While the invention has been described above in the general context of computer-executable instructions of a computer program that runs on a computer and/or computers, those skilled in the art will recognize that the invention also can be implemented in combination with other program modules. Generally, program modules include routines, programs, components, data structures, etc. that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices, microprocessor-based or programmable consumer electronics, and the like. The illustrated aspects of the invention may also be practiced in distributed computing environments where task are performed by remote processing devices that are linked through a communications network. However, some, if not all aspects of the invention can be practiced on stand-alone computers. In a distributed computing environment, program modules may be located in both local and remote memory storage devices.

With reference to FIG. 9, an exemplary environment 910 for implementing various aspects of the invention includes a computer 912. The computer 912 includes a processing unit 914, a system memory 916, and a system bus 918. The system bus 918 couples system components including, but not limited to, the system memory 916 to the processing unit 914. The processing unit 914 can be any of various available processors. Dual microprocessors and other multiprocessor architectures also can be employed as the processing unit 914.

The system bus 918 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 916 includes volatile memory 920 and nonvolatile memory 922. The basic input/output system (BIOS), containing the basic routines to transfer information between elements within the computer 912, such as during start-up, is stored in nonvolatile memory 922. By way of illustration, and not limitation, nonvolatile memory 922 can include read only memory (ROM), programmable ROM (PROM), electrically programmable ROM (EPROM), electrically erasable ROM (EEPROM), or flash memory. Volatile memory 920 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 912 also includes removable/non-removable, volatile/non-volatile computer storage media. FIG. 9 illustrates, for example a disk storage 924. Disk storage 924 includes, but is not limited to, devices like a magnetic disk drive, floppy disk drive, tape drive, Jaz drive, Zip drive, LS-100 drive, flash memory card, or memory stick. In addition, disk storage 924 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 924 to the system bus 918, a removable or non-removable interface is typically used such as interface 926.

It is to be appreciated that FIG. 9 describes software that acts as an intermediary between users and the basic computer resources described in suitable operating environment 910. Such software includes an operating system 928. Operating system 928, which can be stored on disk storage 924, acts to control and allocate resources of the computer system 912. System applications 930 take advantage of the management of resources by operating system 928 through program modules 932 and program data 934 stored either in system memory 916 or on disk storage 924. It is to be appreciated that the present invention can be implemented with various operating systems or combinations of operating systems.

A user enters commands or information into the computer 912 through input device(s) 936. Input devices 936 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 914 through the system bus 918 *via* interface port(s) 938. Interface port(s) 938 include, for example, a serial port, a parallel port, a game port, and a universal serial bus (USB). Output device(s) 940 use some of the same type of ports as input device(s) 936. Thus, for example, a USB port may be used to provide input to computer 912 and to output information from computer 912 to an output device 940. Output adapter 942 is provided to illustrate that there are some output devices 940 like monitors, speakers, and printers, among other output devices 940, which require special adapters. The output adapters 942 include, by way of illustration and not limitation, video and sound cards that provide a means of connection between the output device 940 and the system bus 918. It should be noted that other devices and/or systems of devices provide both input and output capabilities such as remote computer(s) 944.

Computer 912 can operate in a networked environment using logical connections to one or more remote computers, such as remote computer(s) 944. The remote computer(s) 944 can be a personal computer, a server, a router, a network PC, a workstation, a microprocessor based appliance, a peer device or other common network node and the like, and typically includes many or all of the elements described relative to computer 912. For purposes of brevity, only a memory storage device 946 is illustrated with remote computer(s) 944. Remote computer(s) 944 is logically connected to computer 912 through a network interface 948 and then physically connected *via* communication connection 950. Network interface 948 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 950 refers to the hardware/software employed to connect the network interface 948 to the bus 918. While communication connection 950 is shown for illustrative clarity inside computer 912, it can also be external to computer 912. The hardware/software necessary for connection to the network interface 948 includes, for exemplary purposes only, internal and external technologies such as, modems including regular telephone grade modems, cable modems and DSL modems, ISDN adapters, and Ethernet cards.

FIG. 10 is a schematic block diagram of a sample-computing environment 1000 with which the present invention can interact. The system 1000 includes one or more client(s) 1010. The client(s) 1010 can be hardware and/or software (e.g., threads, processes, computing devices). The system 1000 also includes one or more server(s) 1030. The server(s) 1030 can also be hardware and/or software (e.g., threads, processes, computing devices). The servers 1030 can house threads to perform transformations by employing the present invention, for example. One possible communication between a client 1010 and a server 1030 can be in the form of a data packet adapted to be transmitted between two or more computer processes. The system 1000 includes a communication framework 1050 that can be employed to facilitate communications between the client(s) 1010 and the server(s) 1030. The client(s) 1010 are operably connected to one or more client data store(s) 1060 that can be employed to store information local to the client(s) 1010. Similarly, the server(s) 1030 are operably connected to one or more server data store(s) 1040 that can be employed to store information local to the servers 1030.

What has been described above includes examples of the present invention. It is, of course, not possible to describe every conceivable combination of components or methodologies for purposes of describing the present invention, but one of ordinary skill in the art may recognize that many further combinations and permutations of the present invention are possible. Accordingly, the present invention is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the invention. In this regard, it will also be recognized that the invention includes a system as well as a computer-readable medium having computer-executable instructions for performing the acts and/or events of the various methods of the invention.

In addition, while a particular feature of the invention may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."
In summary the subject invention relates to packaging industrial control device data points, classes, services, notifications, behaviors, etc. into a suitable format for communication with entities such as SCADA, MES, ERP, and MC systems, applications, intelligent agents, autonomous I/O, sensor networks, etc. without any need for industrial control protocol support by these entities. The systems and methods wrap such industrial control information within objects accessible by these entities. In one instance, the classes, data points, services, notifications, behaviors, etc. can be wrapped within a Java wrapper and made accessible to at least on of these entities. Such exposure can include making accessible constructors, instances, attributes, permissions, operations, and notifications. Control devices can implement an agent to manage these packaged resources and expose a management API to distributed entities, which can create and destroy managed objects, get and set attribute values, invoke operations, and receive event notifications from other managed objects.

## Claims

1. A system that facilitates communication with an industrial control environment, comprising:
a component that obtains a class associated with a control system; and
a packaging component that wraps the class within a Java wrapper to generate a Java object that is accessible to an entity.

2. The system of claim 1, the Java object includes at least one of the following: a constructor for creating an object instance; an object attribute; an object permission; an operation that can be invoked on the object; and a notification that is sent to one or more registered listeners.

3. The system of claim 1 or 2, the packaging component further wraps at least one of a data point, a service, a notification, and a behavior in the Java object.

4. The system of claim 1, 2 or 3 the class is a CIP class.

5. The system of one of claims 1 to 4, the entity is one of a Supervisory Control and Data Acquisition (SCADA) system, a Manufacturing Execution System (MES), an Enterprise Resource Planning (ERP) system, a Machine Control (MC) system, a SCADA application, a MES application, an ERP application, a MC application, an intelligent agent, autonomous I/O, and a sensor network.

6. The system of one of claims 1 to 5, the control system is associated with at least one of a NetLinx, a Control & Information Protocol (CIP), a Data Highway (DH), a Data Highway Plus (DH+), a fieldbus, a profibus network.

7. The system of one of claims 1 to 6, the entity utilizes the Java object to exercise supervisory control over the industrial controller.

8. The system of one of claims 1 to 7, the entity utilizes the Java object for at least one of the following: to manage an object; to create an object; to destroy an object; to get an attribute; to set an attribute; to invoke an operation; and to receive event notification.

9. The system of one of claims 1 to 8, the Java object is made available to the entity through a JMX framework.

10. The system of one of claims 1 to 9, further comprising a management Application Programming Interface (API) that exposes the Java object to the entity.

11. The system of one of claims 1 to 10, further comprising a server component that manages Java objects within the control system.

12. A method for packaging control information to facilitate communicating with an industrial controller, comprising:
identifying at least one class for an industrial controller;
wrapping the class within an object; and
exposing the object to an entity that accesses the object to exercise supervisory control over the industrial controller.

13. The method of claim 12, further comprising utilizing a Java based technique to generate a Java object.

14. The method of claim 12 or 13 further comprising providing access to at least one of the following: an object constructor; an object attribute; an object permission; an object operation; and an object notification.

15. The method of claim 12, 13 or 14 the class is a CIP class.

16. The method of one of claims 12 to 15, the entity is one of a Supervisory Control and Data Acquisition (SCADA) system, a Manufacturing Execution System (MES), an Enterprise Resource Planning (ERP) system, a Machine Control (MC) system, a SCADA application, a MES application, an ERP application, a MC application, an intelligent agent, autonomous I/O, and a sensor network.

17. The method of one of claims 12 to 16, further comprising enabling the entity to perform at least one of the following: manage an object; create an object; destroy an object; get an attribute; set an attribute; invoke an operation; and receive event notification.

18. The method of one of claims 12 to 17, further comprising employing a JMX framework to expose the object.

19. The method of one of claims 12 to 18, further comprising wrapping at least one of a data point, a service, a notification, and a behavior in the object.

20. A system that packages control information within objects to facilitate communicating with an industrial controller, comprising:
means for packing industrial control information within an object; and
means for providing access to the object to an entity that utilizes the object to exercise supervisory control over the industrial controller.
